# EUROPEAN PATENT SPECIFICATION

(11) **EP 0 755 626 B1**
(45) Date of publication and mention of the grant of the patent: **21.03.2001**
(21) Application number: 95305235.4
(22) Date of filing: 27.07.1995
(51) Int. Cl.: A01N 25/14, A01N 57/12

(54) **Encapsulation with emulsifiers**
Einkapselung mit Emulgatoren
Encapsulation avec des emulsifiants

(43) Date of publication of application: 29.01.1997
(73) Proprietor: MICRO FLO COMPANY, Mulberry, Florida 33860 (US)
(72) Inventor: Lew, Chel W., Texas 78230 (US); Branly, Keith, Florida 33511 (US); Gaytan, Jesse, Texas 78238 (US)
(74) Representative: Bannerman, David Gardner

(56) References cited:
- EP-A- 0 256 608
- EP-A- 0 331 474
- EP-A- 0 369 612
- EP-A- 0 381 290
- EP-A- 0 473 003
- EP-A- 0 501 798
- WO-A-93/25074
- DE-C- 861 255
- GB-A- 1 070 026
- GB-A- 1 477 705
- CHEMICAL ABSTRACTS, vol. 117, no. 4, 27 July 1992 Columbus, Ohio, US; abstract no. 29762, & IN-A-168 373 (INDIA) 23 March 1991
- DATABASE WPI Week 7226 Derwent Publications Ltd., London, GB; AN 72-42456T [26] & JP-B-47 023 199 (NIHON NOYAKU)

## Description

### FIELD OF THE INVENTION

The present invention relates to encapsulation of agriculturally active ingredients with fatty alcohols.

### BACKGROUND OF THE INVENTION

Some agricultural chemicals are quite useful, but are available only in limited forms and concentrations due to the nature of the chemical. Dimethoate (CAS No. 60-51-5) is one such chemical. Although quite useful as a systemic organophosphate insecticide useful against sucking and chewing insects, the spectrum of viable formulations is quite limited.

Dimethoate is a particularly difficult agricultural chemical to find in high concentration with formulations that are approved by the applicable environmental regulatory agencies. Dimethoate has previously been available only in the form of either wettable powders having a relatively low concentration (less than about 25 wt%) of active dimethoate or emulsifiable concentrates having a somewhat higher concentration of dimethoate (e.g., 25-45 wt%). Each form of dimethoate presents limitations and difficulties in use.

Wettable powders with a low concentration of active ingredient require relatively high application rates of powder to achieve effective application rates of active ingredient. Because reservoir tanks for sprayers have a finite volume, the supply loaded into the tank is exhausted fairly quickly thus requiring return from a field for refilling. With large fields, the need to repeatedly refill is costly in terms of labor and time spent on treating.

Emulsions pose other problems. The emulsifiable concentrates of dimethoate are made by emulsifying dimethoate in one or more nonaqueous solvents. Such solvents are relatively expensive, are not as readily available as water when seeking a dispersion vehicle, and may be phytotoxic to the plants sought to be treated with the dimethoate.

Emulsifiable concentrates of dimethoate also have a maximum solubility of 2.67 #/gal (30.5 wt%) in aromatic solvent. That limit can be elevated to about 43.5 wt% in aromatic solvent if about 45% of cyclohexanone (ketone) solvent is added in addition to the aromatic solvent.

The cyclohexanone also helps to avoid crystallization problems in the concentrate at temperatures down to about 13° C (55° F). Below that temperature, such as during storage in cold warehouses, crystallization in the concentrate forms precipitated impurities that do not redissolve and have no storage stability thereafter.

It is thought to be possible to use acetate solvents at significantly higher cost and higher loading rates. To date, however, the regulatory status of such solvents not yet been resolved.

On the other hand, wettable powders present a different set of difficulties. Wettable powders of dimethoate are conventionally made by a multistep process that includes: (a) grinding high purity dimethoate solids on a ball mill to a size within the range of about 10-30 µm; (b) adding any diluents desired (e.g., clays, talcs, or silica); (c) adding in any wetting or dispersing aids; and (d) forming the mixture into a powder.

Powdered forms of dimethoate have been difficult to make due to the low melting point of concentrated dimethoate (MP of about 45-48° C) and the relatively low decomposition temperature of about 80° C. This low melting point also complicates the manufacturing process because the melting point temperatures can be too easily reached when concentrated dimethoate solids are milled to produce the size range needed for conventional methods of making wettable powders. The melted dimethoate can causing gumming of equipment or pose the risk of runaway oxidation in the milling apparatus. For that reason, dimethoate wettable powders are generally made in commercial facilities only on days when the ambient temperature is less than about 10° C such as in late Fall, Winter, and early Spring. It would be desirable to have a dimethoate solid that could be made without the previous sensitivity to manufacturing climate.

Wettable powders also exhibit a limited shelf life of less than about one year. It is thought that the clay used to make the powder contains adsorbed water which, during storage, hydrolyzes the dimethoate into less active or inactive forms. Fresh dimethoate product must be made for each agricultural season with a requirement that the forecasted need be fairly accurate to avoid shortages or waste inventory. It would be desirable to have a dimethoate solid that had a shelf life of more than one year, preferably more than about two years to permit inventory to be carried over to the succeeding season.

It would be useful to have a formulation for dimethoate with the solvent-free characteristics of wettable powders yet the high loading capacity of an emulsifiable concentrate.

### SUMMARY OF THE INVENTION

It is an objective of the invention to provide a solid agricultural formulation that can contains more than about 25 wt% dimethoate.

It is another objective of the invention to provide a solid formulation for dimethoate and other agriculturally effective active ingredients that are sensitive to hydrolysis during storage and which exhibit a shelf life of greater than one year to permit inventory carryover to at least the next agricultural season.

It is a further objective of the invention to provide a process for making a solid agricultural wettable powder product that avoids high processing temperatures.

In accordance with these and other objectives of the invention, solid agricultural powder formulations according to the invention comprise a wettable powder containing:
(a) more than 25 wt% of an agriculturally effective active ingredient that is water insoluble, insoluble or sparingly soluble in aliphatics and aromatics, and which exhibits a flash point temperature of less than about 36 °C; and
(b) an encapsulating binder that is an emulsifier for said agriculturally effective active ingredient, exhibits a stable solid form at 20° C, and exhibits a melting point-within the range of about 40° to about 100° C.

The process for making powdered solids according to the invention comprises:
(a) mixing more than 25 wt% of a finely divided or liquid agriculturally effective active ingredient that is water insoluble, insoluble or sparingly soluble in aliphatics and aromatics, and which exhibits a flash point temperature of less than about 36 °C; is mixed into a molten binder that is an emulsifier for said agriculturally effective active ingredient, exhibits a stable solid form at 20° C, and exhibits a melting point within the range of about 40° to about 100° C.; and
(b) forming the active ingredient/binder mixture into solid particles.

The solid agricultural powder formulation of the invention provides an agriculturally effective product that is free of the solvents and associated regulatory concerns applicable to emulsifiable concentrates with the convenience and improved storage stability of wettable powders. When applied to dimethoate, the dimethoate powders of the invention can also be made with higher levels of dimethoate than previously available with prior wettable powder formulations thereby reducing the volume and weight of applied material.

### DETAILED DESCRIPTION

The present invention is based on the use of a water dispersible, water soluble, encapsulating binder that also exhibits solubility for an agriculturally effective active ingredient (AI) homogeneously distributed therein. The dual solubilities of the binder permit the formation of wettable powders containing high levels of AI which do not require nonaqueous solvents for suspension and dispersion.

### Binders

Encapsulating binder materials according to the invention must: (a) be good emulsifiers for the water insoluble agriculturally Ais sought to be formulated; (b) exist in a stable solid form at about 20° C; and (c) exhibit a melting point within the range of about 35° to about 100° C. Exemplary binders are film-forming polymers that include fatty alcohols such as cetyl alcohol (MP=46-50° C), stearyl alcohol (MP=51-60° C), myristyrl alcohol (MP=38° C); other fatty acids exhibiting a melting point within the range from about 63°-67° C (e.g., stearic acid and palmitic acid); fatty esters exhibiting a melting point within the range of about 35°-70°C (e.g., methyl stearate); and fatty methyl esters exhibiting a melting point within the range of about 35°-70°C (e.g., fatty methyl stearate).

If desired, materials that are not solid at room temperature can be added to adjust the release characteristics of the final product. Liquids that are good emulsifiers will increase the release rate and facilitate dispersion of the encapsulated product.

### Active Ingredients

Agriculturally active ingredients (Ais) suitable for encapsulation binding by the present invention are: (a) water insoluble; (b) insoluble or sparingly soluble in aliphatics and aromatics; and (c) exhibit a flash point temperature of less than about 120° C (100° F). Agriculturally effective active ingredients should also be soluble in the encapsulating binder at room temperature. Such solubility is readily determined by simply observing whether an encapsulated material separates from the binder upon standing and whether a cooled mixture of the two maintains a dry, free flowing powder form. Solubility of the active material in the binder is characterized by the retention of a dry powder form after standing at 20° C for 10 minutes and the need for a higher temperature to re-melt the solidified mixture. Insolubility exists when solid particles "weep" and form a liquid phase upon cooling.

Exemplary Ais that meet one or more of the criteria for the invention include solid and liquid forms of the carbamates (e.g., carbaryl, aldicarb, methomyl, carbofuran, bendiocarb, oxamyl, thiodicarb, trimethylcarb); organophosphates (e.g., phorate, terbufos, fonophos, isofenphos, ethoprop, fenamiphos, disulfoton, malathion, parathion, demeton, dimethoate, chlorpyrifos, diazinon, and phosmet); compounds which break down an insect's digestive tract tissue including fluorine compounds (cryolite), zinc, and mercury; nicotine; rotenone; neem oil or azadirachtin; natural or synthetic pyrethrins; petroleum oils; the halogenated hydrocarbons (e.g., endrin, aldrin and its epoxide, dieldrin, heptachlor, DDT, BHC, lindane, chlordane, methoxychlor, DDD, TDE, and the polychlorinated biphenyls); Bacillus thuringiensis; and insecticidal viruses (e.g., entomopathogenic viruses such as the bacculo viruses).

The process for making the encapsulated agricultural AIs includes: (a) melting the encapsulating binder material along with any surfactant and/or dissolution enhancer for the AI; (b) melting the AI before, during, or just after melting the AI; (c) mixing the molten AI into the molten binder until the AI is thoroughly and homogeneously distributed throughout the molten binder; and (d) forming the encapsulated AI solid powder by any of the conventional particle forming techniques. Suitable particle forming methods include rotating disks or nozzles with orifices sized to the particle size to be formed, low pressure extrusion, spray congealing, pan granulation, and bricquetting.

In the preferred encapsulation process, finely divided exhibiting a melting point of less than about 50° C or liquid AI is mixed into molten binder and formed into droplets. Low melting point AI (e.g., dimethoate is particularly preferred) should be added as a molten liquid to the molten binder and mixed sufficiently to form a homogeneous, compatible mixture. In general, finely divided AI solids must be first ground to size with conventional techniques if the AI is not commercially available in a pre-ground form. AI solids exhibiting a size of less than about 100 µm in diameter is well suited for the present invention. The invention is particularly useful for AI solids having a size within the range from about 0.1 µm to about 50 µm and even more useful for AI solids within the range of 2 µm to about 30 µm. As used herein, reference to AI solids includes active ingredients that naturally exhibit a solid form at room temperature as well as liquids that have been previously encapsulated or adsorbed in a solid carrier.

The AI is added to a molten binder containing any additives and mixed. Molten binder is preferably melted in a stirred, jacketed vessel to control the melting temperature. The molten binder preferably exhibits a viscosity of less than about 1000 cp, more preferably less than about 500 cp, and most preferably less than about 100 cp to allow particle formation through conventional nozzles and extrusion equipment.

At some concentration level that is unique to each active ingredient, however, no additional AI can be carried by the binder. Attempting to add more AI adversely affects the structural integrity of the resulting particle. At very high concentrations of AI, e.g., greater than about 70 wt% for some materials, the amount of binder is insufficient to impart integrity to the microcapsule. An overloaded particle is friable and cannot maintain a structurally intact particle form with even moderate pressure thereby breaking apart and forming undesired fines. Rolling the formed particles between the thumb and forefinger with a moderate crushing pressure will readily reveal whether the loading limit of the binder has been exceeded.

The structural integrity of the particle can be enhanced by adding to the molten first film-forming polymer binder a quantity of a second film-forming polymer the is sufficient to enhance the strength of the resulting binder relative to the binder without the second film-forming polymer. Generally, no more than about 0.001-10 wt% of the strength enhancing second film-forming polymer is sufficient to enhance the structural integrity of a particle formed therefrom. Preferably, the second film-forming polymer is used in an amount within the range from about 0.001 wt% to about 5 wt%, even more preferably within the range of 0.1-1 wt%, based on the amount of the binder. Preferably, the second film-forming polymer is added to the molten binder and mixed until homogeneous, i.e., fully dissolved in the binder base material, before the agriculturally effective active ingredient is added to the resulting molten binder mixture.

Preferred second film-forming polymers are alcohol and water soluble with a tensile strength of greater than about 2000 psi and an elongation of greater than about 10%. Solubility of the film-forming polymer in alcohol will ensure chemical compatibility with the binder, and water solubility will assure that the dispersability and dissolution characteristics of the particle are not significantly affected.

Suitable second film-forming polymers for use in the invention include cellulose derivatives (i.e., hydroxypropyl cellulose, hydroxyethyl cellulose); polyethylene oxide; polyvinylpyrrolidone, and hydroxypropyl guar. In a particularly preferred embodiment, the second film-forming polymer that exhibits a relatively higher melting point but which is soluble in the molten binder material is added to the molten binder in a quantity sufficient to raise the final melting point of the resulting binder. An increase in the melting point of the binder will provide an additional measure of increased stability under the conditions normally encountered in commercial product storage.

Once thoroughly mixed into a homogeneous material, the temperature of the mixed, molten material is lowered in the stirred vessel to a temperature above the solidification temperature of the molten, homogeneously mixed material. Preferably, the temperature is lowered to a temperature of no more than about 5-15° C above the solidification temperature. The specific temperature will depend on the particular binder material used as well as any solvents that have been added. Preferably, the encapsulated AI will exhibit a melting point within the range from about 40° C to about 70 C°.

In general, cooling the molten material inside the stirred, jacketed vessel is less expensive and more flexible than constructing a congealing tower or zone that is tall enough to accommodate the required degree of cooling for all possible formulations made by the present invention.

Once cooled to the desired temperature, the molten binder/AI mixture is sprayed downwardly through any droplet forming device (e.g., nozzles or circular disks exhibiting sized holes) into the top of a congealing tower or zone. As the droplets fall through the cooling area, they solidify and form particles of encapsulated AI.

To reduce the occurrences of plugging, the molten binder/AI can be sprayed into a congealing tower through heated nozzles or a heated rotating disk. Preferably, the nozzles or disk are heated to a temperature of at least about 10°C above the solidification temperature of the binder/AI mixture. In its most preferred form, a stainless steel disk atomizer is heated with a radiant heater located below the disk and directed upwardly against the bottom of the disk. Virtually any other form of heat can, however, be used. The nozzles or disk are preferably heated to a temperature within the range from about 30° C to about 50° C while the congealing tower is cooled by an upwardly flowing stream of air at a temperature within the range from about 5° C to about 20° C. An air diverter is preferably used for shielding the heated nozzles from contact with the rising cool air. In effect, the diverter is used to divide the cooling tower into a heated zone immediately around the droplet forming orifices and a cooling zone around the periphery for cooling the droplets into solid particles.

The air flow rate is selected to produce a falling rate to allow sufficient time for the particle to solidify completely by the time the particle reaches the collection area at the bottom of the tower. For particles with a diameter of about 300-600 µm, a congealing tower height of about 1-2 m is generally sufficient.

Solid product particles can be collected easily because the solids are dry and non-tacky at the exit from the congealing zone. In the laboratory, solid product can be collected on a tarp or mat. Commercial processes may wish to use more efficient collection means with chutes, weighing sections, and automatic packaging devices.

The encapsulated active ingredient particles prepared according to the process of the invention generally exhibit a size within the range from about 10 µm to about 3000 µm. Encapsulated products exhibiting a size within the range of about 10-1500 µm, preferably 100-600 µm, for spraying through conventional spraying equipment. Encapsulated solids exhibiting a size within the range of about 600-3000 µm are preferred for use in a dry granular product form.

### EXAMPLES

In each of the examples, the normally solid alcohol was melted at a temperature of about 60° C. The surfactant, starch, and active ingredient were then added seriatim and mixed in a high shear mixer until the mixture was homogeneous. The mixture was then formed into droplets by passing the molten mixture through sized openings in the perimeter of a rotating metal disk heated to a temperature within the range from about 38°-43° C. The molten mixture was allowed to cool as it dropped through air chilled to a temperature within the range from about 15°-18° C over a height of about 1.2m. The solidified particles were collected on a tarp beneath the rotating disk assembly.

### Example 1

Encapsulated dimethoate solids were made from the materials listed in Table 1.

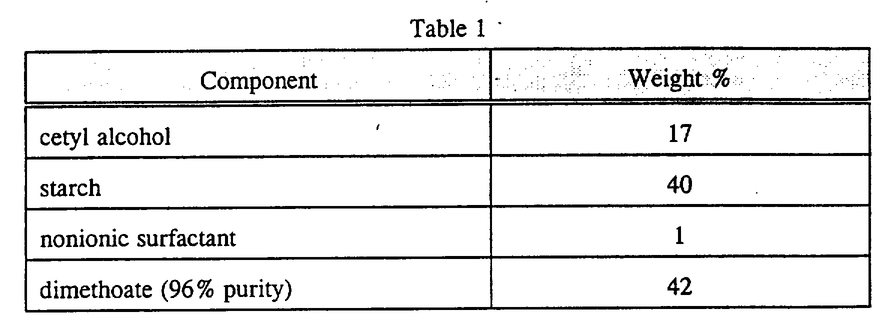

### Example 2

Encapsulated dimethoate solids were made from the materials listed in Table 2. Fumed silica was added as an anti-caking aid.

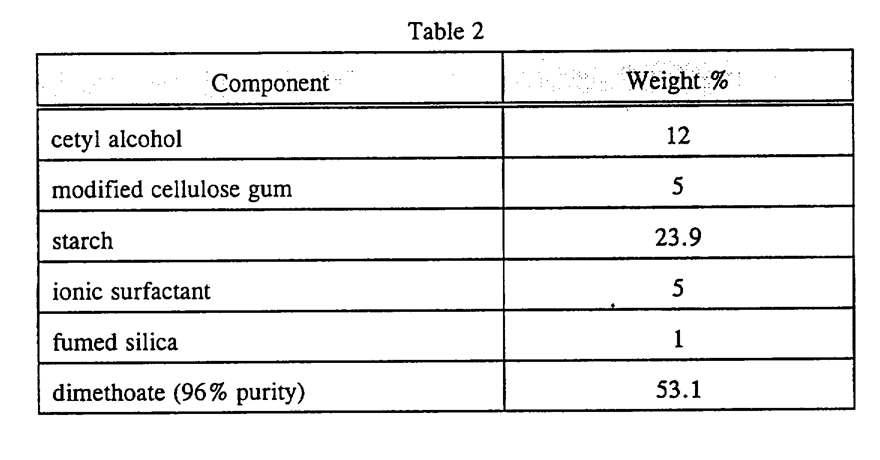

## Claims

1. A wettable powder comprising:
(a) more than 25 wt% of an agriculturally effective active ingredient that is water insoluble, insoluble or sparingly soluble in aliphatics and aromatics, and which exhibits a flash point temperature of less than 36 °C; and
(b) an encapsulating binder that is an emulsifier for said agriculturally effective active ingredient, exhibits a stable solid form at 20° C, and exhibits a melting point within the range of 40° to 100° C.

2. A powder as in claim 1 wherein said agriculturally effective active ingredient is selected from the group consisting of carbamates, organophosphates, compounds which break down an insect's digestive tract tissue, nicotine, rotenone, neem oil or azadirachtin, natural or synthetic pyrethrins, petroleum oils, halogenated hydrocarbons, Bacillus thuringiensis, and insecticidal viruses.

3. A powder as in claim 1 wherein said agriculturally effective active ingredient comprises dimethoate.

4. A powder as in any of claims 1 to 3 wherein said encapsulating binder comprises a fatty alcohol exhibiting a melting point within the range of 35° to 100° C.

5. A powder as in claim 4 wherein said encapsulating binder comprises cetyl alcohol.

6. A powder as in claim 4 wherein said encapsulating binder comprises stearyl alcohol.

7. A powder as in any preceeding claim wherein said encapsulating binder further comprises a second film-forming polymer in a quantity sufficient to enhance the strength of the resulting binder relative to the binder without the second film-forming polymer.

8. A powder as in claim 7 wherein said second film-forming binder is alcohol and water soluble with a tensile strength of greater than 2000 psi and an elongation of greater than 10%.

9. A powder as in claim 7 wherein said second film-forming binder is selected from the group consisting of cellulose derivatives; polyethylene oxide; polyvinylpyrrolidone, and hydroxypropyl guar.

10. A powder as in claim 9 wherein said second film-forming binder is selected from the group consisting of hydroxypropyl cellulose and hydroxyethyl cellulose.

11. A process for encapsulating an active ingredient by the steps comprising:
(a) mixing more than 25 wt% of a finely divided or liquid agriculturally effective active ingredient that is water insoluble, insoluble or sparingly soluble in aliphatics and aromatics, and which exhibits a flash point temperature of less than 36 °C; into a molten binder that is an emulsifier for said agriculturally effective active ingredient, exhibits a stable solid form at 20° C, and exhibits a melting point within the range of 40° to 100° C.; and
(b) forming the active ingredient/binder mixture into solid particles.

12. A process as in claim 11 wherein the mixing step comprises:
mixing an agriculturally effective active ingredient selected from the group consisting of carbamates, organophosphates, compounds which break down an insect's digestive tract tissue, nicotine, rotenone, neem oil or azadiractin, natural or synthetic pyrethrins, petroleum oils, halogenated hydrocarbons, Bacillus thuringiensis, and insecticidal viruses into a molten fatty alcohol exhibiting a melting point within the range of 35° to 100° C.

13. A process as in claim 12 wherein the mixing step comprises:
mixing dimethoate into molten cetyl alcohol.

14. A process as in claim 11 wherein the mixing step further comprises:
mixing said agriculturally effective active ingredient into a molten binder comprising: (a) a first film-forming polymer selected from the group consisting of fatty alcohols and fatty acids exhibiting a melting point within the range from 35° to 100° C, fatty esters exhibiting a melting point within the range of 35°-70°C, and fatty methyl esters exhibiting a melting point within the range of 35°-70°C; and (b) a second film-forming polymer that is soluble in alcohol and water, exhibits a tensile strength of greater than 2000 psi, and exhibits an elongation of greater than 10%.

15. A process as in claim 14 wherein the mixing step comprises:
mixing said agriculturally effective active ingredient with a molten binder comprising a homogeneous mixture of: (a) a first film-forming polymer selected from the group consisting of fatty alcohols and fatty acids exhibiting a melting point within the range from 35° to 100° C, fatty esters exhibiting a melting point within the range of 35° -70°C, and fatty methyl esters exhibiting a melting point within the range of 35°-70°C; and (b) a second film-forming polymer selected from the group consisting of cellulose derivatives; polyethylene oxide; polyvinylpyrrolidone, and hydroxypropyl guar.

16. A process as in claim 15 wherein the mixing step comprises:
mixing molten dimethoate with a binder comprising a molten mixture of: (a) a fatty alcohol exhibiting a melting point within the range from 35° to 100° C; and (b) a cellulose derivative.

17. A wettable powder comprising:
(a) more than 25 wt% of dimethoate; and
(b) an encapsulating binder made from a fatty alcohol having a melting point within the range of 35° -100° C.

18. A powder as in claim 17 wherein said encapsulating binder comprises cetyl alcohol.

19. A powder as in claim 17 wherein said encapsulating binder comprises stearyl alcohol.

20. A powder as in any of claims 17 to 19 wherein said encapsulating binder further comprises a second film-forming polymer in a quantity sufficient to enhance the strength of the resulting binder relative to the binder without the second film-forming polymer.

21. A powder as in claim 20 wherein said second film-forming binder is alcohol and water soluble with a tensile strength of greater than 2000 psi and an elongation of greater than 10%.

22. A powder as in claim 20 wherein said second film-forming binder is selected from the group consisting of cellulose derivatives; polyethylene oxide; polyvinylpyrrolidone, and hydroxypropyl guar.

23. A powder as in claim 22 wherein said second film-forming binder is selected from the group consisting of hydroxypropyl cellulose and hydroxyethyl cellulose.

24. A process for encapsulating an active ingredient by the steps comprising:
(a) mixing more than 25 wt% of dimethoate into a molten binder made of a fatty alcohol with a melting point within the range of 35° to 100° C.; and
(b) forming the mixture into solid particles.

25. A process as in claim 24 wherein the mixing step comprises:
mixing dimethoate into molten cetyl alcohol.

26. A process for encapsulating dimethoate by the steps comprising:
mixing dimethoate into a molten binder comprising: (a) a first film-forming polymer selected from the group consisting of fatty alcohols and fatty acids exhibiting a melting point within the range from 35° to 100° C, fatty esters exhibiting a melting point within the range of 35°-70°C, and fatty methyl esters exhibiting a melting point within the range of 35°-70°C; and (b) a second film-forming polymer that is soluble in alcohol and water, exhibits a tensile strength of greater than 2000 psi, and exhibits an elongation of greater than 10%.

27. A process as in claim 26 wherein the mixing step comprises:
mixing said dimethoate with a molten binder comprising a homogeneous mixture of: (a) a first film-forming polymer selected from the group consisting of fatty alcohols and fatty acids exhibiting a melting point within the range from 35° to 100° C, fatty esters exhibiting a melting point within the range of 35°-70°C, and fatty methyl esters exhibiting a melting point within the range of 35°-70°C; and (b) a second film-forming polymer selected from the group consisting of cellulose derivatives; polyethylene oxide; polyvinylpyrrolidone, and hydroxypropyl guar.

28. A process as in claim 26 wherein the mixing step comprises:
mixing molten dimethoate with a binder that includes a molten mixture of: (a) a fatty alcohol exhibiting a melting point within the range from 35° to 100° C; and (b) a cellulose derivative.

## Patentansprüche

1. Ein benetzbares Pulver, umfassend:
(a) mehr als 25 Gew.% eines landwirtschaftlich effektiven Wirkstoffs, der nicht wasserlöslich ist, der in Aliphaten und Aromaten nicht löslich oder wenig löslich ist, und der eine Flammpunkt-Temperatur von weniger als 36°C zeigt; und
(b) einen einkapselnden Binder, der für den landwirtschaftlich effektiven Wirkstoff ein Emulgator ist, eine stabile feste Form bei 20°C zeigt und einen Schmelzpunkt innerhalb des Bereichs von 40° bis 100°C zeigt.

2. Ein Pulver wie in Anspruch 1, wobei der landwirtschaftlich effektive Wirkstoff aus der Gruppe ausgewählt ist, die aus Carbamaten, Organophosphaten, Verbindungen, die das Gewebe des Verdauungssystems eines Insektes zersetzen, Nikotin, Rotenon, Nimöl oder Azadirachtin, natürlichen oder synthetischen Pyrethrinen, Erdölen, halogenierten Kohlenwasserstoffen, Bacillus thuringiensis und als Insektide wirkenden Viren.

3. Ein Pulver wie in Anspruch 1, wobei der landwirtschaftlich effektive Wirkstoff Dimethoat umfasst.

4. Ein Pulver wie in einem der Ansprüche 1 bis 3, wobei der einkapselnde Binder ein fettiges Alkohol umfasst, das einen Schmelzpunkt innerhalb des Bereichs von 35° bis 100°C zeigt.

5. Ein Pulver wie in Anspruch 4, wobei der einkapselnde Binder Cetylalkohol umfasst.

6. Ein Pulver wie in Anspruch 4, wobei der einkapselnde Binder ein Stearylalkohol umfasst.

7. Ein Pulver wie in irgendeinem vorhergehenden Anspruch, wobei der einkapselnde Binder weiter ein zweites filmbildendes Polymer in einer Quantität umfasst, die ausreichend ist, um die Festigkeit des resultierenden Binders relativ zum Binder ohne das zweite filmbildende Polymer zu erhöhen.

8. Ein Pulver wie in Anspruch 7, wobei der zweite filmbildende Binder Alkohol ist, das wasserklöslich ist, und das eine Zugfestigkeit von größer als 2000 psi und einer Dehnung von größer als 10% zeigt.

9. Ein Pulver wie in Anspruch 7, wobei der zweite filmbildende Binder aus der Gruppe ausgewählt ist, die aus Zellulose-Derivaten; Polyethylenoxid; Polyvinylpyrrolidon und Hydroxypropylguar besteht.

10. Ein Pulver wie in Anspruch 9, wobei der zweite filmbildende Binder aus der Gruppe ausgewählt ist, die aus Hydroxypropyl-Zellulose und Hydroxyethyl-Zellulose besteht.

11. Ein Verfahren zum Einkapseln eines Wirkstoffs durch die Schritte, die umfasst:
(a) Mischen von mehr als 25 Gew.% eines fein verteilten oder flüssigen, landwirtschaftlich effektiven Wirkstoffs, der nicht wasserlöslich ist, in Aliphaten und Aromaten unlöslich oder wenig löslich ist, und der eine Flammpunkt-Temperatur von weniger als 36°C zeigt in einen geschmolzenen Binder, der für den landwirtschaftlich effektiven Wirkstoff ein Emulgator ist, eine stabile Form bei 20°C zeigt und einen Schmelzpunkt innerhalb des Bereichs von 40° bis 100°C zeigt; und
(b) Bilden der Wirkstoff-Binder-Mischung in feste Partikel.

12. Ein Verfahren wie in Anspruch 11, wobei der Schritt des Mischens umfasst:
Mischen eines landwirtschaftlich effektiven Wirkstoffs, der aus der Gruppe ausgewählt ist, die aus Carbamaten, Organophosphaten, Verbindungen, die das Gewebe des Verdauungssystems eines Insektes zersetzen, Nikotin, Rotenon, Nimöl oder Azadirachtin, natürlichen oder synthetischen Pyrethrinen, Erdölen, halogenierten Kohlenwasserstoffen, Bacillus thuringiensis und als Insektizide wirkenden Viren besteht, in ein geschmolzenes fettiges Alkohol, das einen Schmelzpunkt innerhalb des Bereichs von 35° bis 100°C zeigt.

13. Ein Verfahren wie in Anspruch 12, wobei der Schritt des Mischens umfasst:
Mischen Dimethoat in geschmolzenes Cetyl-Alkohol.

14. Ein Verfahren wie in Anspruch 11, wobei der Schritt des Mischens weiter umfasst:
Mischen des landwirtschaftlich effektiven Wirkstoffs in einen geschmolzenen Binder, der umfasst: (a) ein erstes, filmbildendes Polymer, das aus der Gruppe ausgewählt ist, die besteht aus fettigen Alkoholen und Fettsäuren, die einen Schmelzpunkt innerhalb des Bereichs von 35° bis 100°C zeigen, fettigen Estern, die einen Schmelzpunkt innerhalb des Bereichs von 35°-70°C zeigen, und fettigen Methylestern, die einen Schmelzpunkt innerhalb des Bereichs von 35°-70°C zeigen; und (b) ein zweites, filmbildendes Polymer, das in Alkohol und Wasser löslich ist, das eine Zugfestigkeit von größer als 2000 psi zeigt und eine Dehnung von etwa 10% zeigt.

15. Ein Verfahren wie in Anspruch 14, wobei der Schritt des Mischens umfasst:
Mischen des landwirtschaftlich effektiven Wirkstoffs mit einem geschmolzenen Binder, der eine homogene Mischung umfasst, die besteht aus: (a) einem ersten, filmbildenden Polymer, das aus der Gruppe ausgewählt ist, die besteht aus fettigen Alkoholen und Fettsäuren, die einen Schmelzpunkt innerhalb des Bereichs von 35° bis 100°C zeigen, fettigen Estern, die einen Schmelzpunkt innerhalb des Bereichs von 35°-70°C zeigen, und fettigen Methylestern, die einen Schmelzpunkt innerhalb des Bereichs von 35°-70°C zeigen; und (b) einem zweiten, filmbildenden Polymer, das aus der Gruppe ausgewählt ist, die aus Zellulose-Derivaten; Polyethylenoxid; Polyvinylpyrrolidon, und Hydroxypropylguar besteht.

16. Ein Verfahren wie in Anspruch 15, wobei der Schritt des Mischens umfasst:
Mischen geschmolzenes Dimethoats mit einem Binder, der eine geschmolzene Mischung umfasst, die besteht aus: (a) einem fettigen Alkohol, das einen Schmelzpunkt innerhalb des Bereichs von 35° bis 100°C zeigt; und (b) einem Zellulose-Derivat.

17. Ein benetzbares Pulver, umfassend:
(a) mehr als 25 Gew.% Dimethoat; und
(b) einen einkapselnden Binder aus einem fettigen Alkohol, das einen Schmelzpunkt innerhalb des Bereichs von 35°-100°C zeigt.

18. Ein Pulver wie in Anspruch 17, wobei der einkapselnde Binder Cetylalkohol umfasst.

19. Ein Pulver wie in Anspruch 17, wobei der einkapselnde Binder Stearylalkohol umfasst.

20. Ein Pulver wie in irgendeinem der Ansprüche 17 bis 19, wobei der einkapselnde Binder weiter ein zweites, filmbildendes Polymer in einer solchen Quantität umfasst, die ausreichend ist, um die Festigkeit des resultierenden Binders relativ zum Binder ohne das zweite, filmbildende Polymer zu erhöhen.

21. Ein Pulver wie in Anspruch 20, wobei der zweite, filmbildende Binder alkohol- und wasserlöslich ist und eine Zugfestigkeit von größer als 2000 psi und eine Dehnung von größer als 10% zeigt.

22. Ein Pulver wie in Anspruch 20, wobei der zweite, filmbildende Binder aus der Gruppe ausgewählt ist, die aus Zellulose-Derivaten; Polyethylenoxid; Polyvinylpyrrolidon und Hydroxypropylguar besteht.

23. Ein Pulver wie in Anspruch 22, wobei der zweite, filmbildende Binder aus der Gruppe ausgewählt ist, die aus Hydroxypropyl-Zellulose und Hydroxyethyl-Zellulose besteht.

24. Ein Verfahren zum Einkapseln eines Wirkstoffs durch die Schritte, die umfassen:
(a) Mischen von mehr als 25 Gew.% Dimethoats in einen geschmolzenen Binder aus fettigem Alkohol mit einem Schmelzpunkt innerhalb des Bereichs von 35° bis 100°C; und
(b) Bilden der Mischung in feste Partikel.

25. Ein Verfahren wie in Anspruch 24, wobei der Schritt des Mischens umfasst:
Mischen des Dimethoats in ein flüssiges Cetylalkohol.

26. Ein Verfahren zum Einkapseln von Dimethoat durch die Schritte, die umfassen:
Mischen von Dimethoat in einen geschmolzenen Binder, der umfasst: (a) ein erstes, filmbildendes Polymer, das aus der Gruppe ausgewählt ist, die besteht aus fettigen Alkoholen und Fettsäuren, die einen Schmelzpunkt innerhalb des Bereichs von 35° bis 100°C zeigen, fettigen Estern, die einen Schmelzpunkt innerhalb des Bereichs von 35°-70°C zeigen und fettigen Methylestern, die einen Schmelzpunkt innerhalb des Bereichs von 35°-70°C zeigen; und (b) ein zweites, filmbildendes Polymer, das in Alkohol und Wasser löslich ist, das eine Zugfestigkeit von größer als 2000 psi zeigt, und das eine Dehnung von größer als 10% zeigt.

27. Ein Verfahren wie in Anspruch 26, wobei der Schritt des Mischens umfasst:
Mischen des Dimethoats mit einem geschmolzenen Binder, der eine homogenen Mischung umfasst, die besteht aus: (a) einem ersten, filmbildenden Polymer, das aus der Gruppe ausgewählt ist, die besteht aus fettigen Alkoholen und Fettsäuren, die einen Schmelzpunkt innerhalb des Bereichs von 35° bis 100°C zeigen, fettigen Estern, die einen Schmelzpunkt innerhalb des Bereichs von 35°-70°C zeigen, und fettigen Methylestern, die einen Schmelzpunkt innerhalb des Bereichs von 35°-70°C zeigen; und (b) einem zweiten, filmbildenden Polymer, das aus der Gruppe ausgewählt ist, die aus Zellulose-Derivaten; Polyethylenoxid; Polyvinylpyrrolidon und Hydroxypropylguar besteht.

28. Ein Verfahren wie in Anspruch 26, wobei der Schritt des Mischens umfasst:
Mischen geschmolzenen Dimethoats mit einem Binder, der eine geschmolzene Mischung umfasst, die besteht aus: (a) einem fettigen Alkohol, das einen Schmelzpunkt innerhalb des Bereichs von 35° bis 100°C zeigt; und (b) einem Zellulose-Derivat.

## Revendications

1. Poudre mouillable caractérisée en ce qu'elle comporte :
(a) plus de 25 % en masse d'un ingrédient actif utile pour l'agriculture qui est insoluble dans l'eau, insoluble ou modérément soluble dans les composés aliphatiques et aromatiques, et qui présente une température de point éclair inférieure à 36°C ; et
(b) un liant d'encapsulation qui est un émulsifiant pour cet ingrédient actif utile pour l'agriculture, qui présente un état solide stable à 20°C et un point de fusion situé dans la gamme allant de 40° à 100°C.

2. Poudre selon la revendication 1, caractérisée en ce que l'ingrédient actif utile pour l'agriculture est choisi dans le groupe formé par les carbamates, les organophosphates, les composés qui décomposent les tissus du tube digestif d'un insecte, la nicotine, la roténone, l'huile de margousier ou l'azadirachtine, les pyréthrines naturelles ou synthétiques, les huiles de pétrole, les hydrocarbures halogénés, le Bacillus thuringiensis et les virus insecticides.

3. Poudre selon la revendication 1, caractérisée en ce que l'ingrédient actif utile pour l'agriculture comprend du diméthoate.

4. Poudre selon l'une quelconque des revendications 1 à 3, caractérisée en ce que le liant d'encapsulation comprend un alcool gras présentant un point de fusion situé dans la gamme allant de 35° à 100°C.

5. Poudre selon la revendication 4, caractérisée en ce que le liant d'encapsulation comprend de l'alcool cétylique.

6. Poudre selon la revendication 4, caractérisée en ce que le liant d'encapsulation comprend de l'alcool stéarylique.

7. Poudre selon l'une quelconque des revendications précédentes, caractérisée en ce que le liant d'encapsulation comprend en outre un second polymère filmogène en quantité suffisante pour améliorer la résistance du liant résultant par rapport au liant ne contenant pas le second polymère filmogène.

8. Poudre selon la revendication 7, caractérisée en ce que le second liant filmogène est soluble dans l'alcool et dans l'eau et présente une résistance à la rupture supérieure à 2000 psi et une élongation supérieure à 10%.

9. Poudre selon la revendication 7, caractérisée en ce que le second liant filmogène est choisi dans le groupe formé par les dérivés de cellulose, l'oxyde de polyéthylène, la polyvinylpyrrolidone et le guar hydroxypropyle.

10. Poudre selon la revendication 9, caractérisée en ce que le second liant filmogène est choisi dans le groupe formé par la hydroxypropyl-cellulose et la hydroxyéthyl-cellulose.

11. Procédé pour l'encapsulation d'un ingrédient actif caractérisé en ce qu'il comprend les étapes suivantes :
(a) mélange de plus de 25% en masse d'un ingrédient actif utile pour l'agriculture, liquide ou finement divisé qui est insoluble dans l'eau, insoluble ou modérément soluble dans les composés aliphatiques et aromatiques, et qui présente une température de point éclair inférieure à 36°C ; avec un liant fondu qui est un émulsifiant pour cet ingrédient actif utile pour l'agriculture, qui présente un état solide stable à 20°C et un point de fusion situé dans la gamme allant de 40° à 100°C ; et
(b) façonnage du mélange ingrédient actif/liant en particules solides.

12. Procédé selon la revendication 11, caractérisé en ce que l'étape de mélange comprend le mélange d'un ingrédient actif utile pour l'agriculture choisi dans le groupe formé par les carbamates, les organophosphates, les composés qui décomposent les tissus du tube digestif d'un insecte, la nicotine, la roténone, l'huile de margousier ou l'azadirachtine, les pyréthrines naturelles ou synthétiques, les huiles de pétrole, les hydrocarbures halogénés, le Bacillus thuringiensis et les virus insecticides, dans un alcool gras fondu présentant un point de fusion situé dans la gamme allant de 35° à 100°C.

13. Procédé selon la revendication 12, caractérisé en ce que l'étape de mélange comprend le mélange de diméthoate dans de l'alcool cétylique fondu.

14. Procédé selon la revendication 11, caractérisé en ce que l'étape de mélange comprend en outre le mélange de l'ingrédient actif utile pour l'agriculture avec un liant fondu comprenant :
(a) un premier polymère filmogène choisi dans le groupe formé par les alcools gras et les acides gras présentant un point de fusion situé dans la gamme allant de 35° à 100°C, les esters gras présentant un point de fusion situé dans la gamme allant de 35° à 70°C et les esters méthyliques gras présentant un point de fusion situé dans la gamme allant de 35° à 70°C ; et
(b) un second polymère filmogène qui est soluble dans l'alcool et dans l'eau, qui présente une résistance à la rupture supérieure à 2000 psi et une élongation supérieure à 10%.

15. Procédé selon la revendication 14, caractérisé en ce que l'étape de mélange comprend le mélange de l'ingrédient actif utile pour l'agriculture avec un liant fondu comprenant un mélange homogène de :
(a) un premier polymère filmogène choisi dans le groupe formé par les alcools gras et les acides gras présentant un point de fusion situé dans la gamme allant de 35° à 100°C, les esters gras présentant un point de fusion situé dans la gamme allant de 35° à 70°C et les esters méthyliques gras présentant un point de fusion situé dans la gamme allant de 35° à 70°C ; et
(b) un second polymère filmogène choisi dans le groupe formé par les dérivés de cellulose, l'oxyde de polyéthylène, la polyvinylpyrrolidone et le guar hydroxypropyle.

16. Procédé selon la revendication 15, caractérisé en ce que l'étape de mélange comprend le mélange de diméthoate fondu avec un liant comprenant un mélange fondu de :
(a) un alcool gras présentant un point de fusion situé dans la gamme allant de 35° à 100°C ; et
(b) un dérivé de cellulose.

17. Poudre mouillable caractérisée en ce qu'elle comprend :
(a) plus de 25 % en masse de diméthoate ; et
(b) un liant d'encapsulation obtenu à partir d'un alcool gras présentant un point de fusion situé dans la gamme allant de 35° à 100°C.

18. Poudre selon la revendication 17 caractérisée en ce que le liant d'encapsulation comprend de l'alcool cétylique.

19. Poudre selon la revendication 17 caractérisée en ce que le liant d'encapsulation comprend de l'alcool stéarylique.

20. Poudre selon l'une quelconque des revendications 17 à 19, caractérisée en ce que le liant d'encapsulation comprend un second polymère filmogène en quantité suffisante pour améliorer la résistance du liant résultant par rapport à celle du liant ne contenant pas le second polymère filmogène.

21. Poudre selon la revendication 20, caractérisée en ce que le second liant filmogène est soluble dans l'alcool et dans l'eau, et présente une résistance à la rupture supérieure à 2000 psi et une élongation supérieure à 10%.

22. Poudre selon la revendication 20, caractérisée en ce que le second liant filmogène est choisi dans le groupe formé par les dérivés de cellulose, l'oxyde de polyéthylène, la polyvinylpyrrolidone et le guar hydroxypropyle.

23. Poudre selon la revendication 22, caractérisée en ce que le second liant filmogène est choisi dans le groupe formé par la hydroxypropyl-cellulose et la hydroxyéthyl-cellulose.

24. Procédé pour l'encapsulation d'un ingrédient actif caractérisé en ce qu'il comprend les étapes suivantes :
(a) mélange de plus de 25% en masse de diméthoate avec un liant fondu obtenu à partir d'un alcool gras présentant un point de fusion situé dans la gamme allant de 35° à 100°C ; et
(b) façonnage du mélange en particules solides.

25. Procédé selon la revendication 24, caractérisé en ce que l'étape de mélange comprend le mélange de diméthoate dans de l'alcool cétylique fondu.

26. Procédé pour l'encapsulation de diméthoate, caractérisé en ce qu'il comprend les étapes de mélange de diméthoate avec un liant fondu comprenant :
(a) un premier polymère filmogène choisi dans le groupe formé par les alcools gras et les acides gras présentant un point de fusion situé dans la gamme allant de 35° à 100°C, les esters gras présentant un point de fusion situé dans la gamme allant de 35° à 70°C et les esters méthyliques gras présentant un point de fusion situé dans la gamme allant de 35° à 70°C ; et
(b) un second polymère filmogène qui est soluble dans l'alcool et dans l'eau, qui présente une résistance à la rupture supérieure à 2000 psi et une élongation supérieure à 10%.

27. Procédé selon la revendication 26, caractérisé en ce que l'étape de mélange comprend le mélange du diméthoate avec un liant fondu comprenant une mélange homogène de :
(a) un premier polymère filmogène choisi dans le groupe formé par les alcools gras et les acides gras présentant un point de fusion situé dans la gamme allant de 35° à 100°C, les esters gras présentant un point de fusion situé dans la gamme allant de 35° à 70°C et les esters méthyliques gras présentant un point de fusion situé dans la gamme allant de 35° à 70°C ; et
(b) un second polymère filmogène choisi dans le groupe formé par les dérivés de cellulose, l'oxyde de polyéthylène, la polyvinylpyrrolidone et le guar hydroxypropyle.

28. Procédé selon la revendication 26, caractérisé en ce que l'étape de mélange comprend le mélange du diméthoate fondu avec un liant fondu comprenant un mélange fondu de :
(a) un alcool gras présentant un point de fusion situé dans la gamme allant de 35° à 100°C ; et
(b) un dérivé de cellulose.
